# EUROPEAN PATENT SPECIFICATION

(11) **EP 0 478 310 B1**
(45) Date of publication and mention of the grant of the patent: **19.04.1995**
(21) Application number: 91308753.2
(22) Date of filing: 25.09.1991
(51) Int. Cl.: B24D 3/06

(54) **Composite diamond abrasive compact**
Mehrschichtiges Schleifwerkzeug mit Diamanten
Outil abrasif avec diamant

(30) Priority: 26.09.1990 ZA 907690
(43) Date of publication of application: 01.04.1992
(73) Proprietor: DE BEERS INDUSTRIAL DIAMOND DIVISION (PROPRIETARY) LIMITED, Johannesburg, Transvaal (ZA)
(72) Inventor: Tank, Klaus, Essexwold, Johannesburg, Transvaal (ZA); Tomlinson, Peter Noel, Mondeor, Johannesburg, Transvaal (ZA); Martell, Trevor John, Vale Road, Weltevreden Park, Transvaal (ZA)
(74) Representative: Jones, Alan John

(56) References cited:
- EP-A- 0 246 118
- EP-A- 0 371 251
- EP-A- 0 418 078
- US-A- 3 912 500
- US-A- 4 908 046
- US-A- 5 032 147

## Description

### BACKGROUND OF THE INVENTION

This invention relates to composite diamond abrasive compacts.

A composite diamond abrasive compact consists of a diamond compact bonded to a cemented carbide substrate or support. Such compacts are well known in the art and have been described extensively in the patent and other literature. They have also found wide commercial application.

Composite diamond abrasive compacts are generally manufactured by placing a layer of diamond particles on a cemented carbide body to form an unbonded assembly and then subjecting that unbonded assembly to elevated temperature and pressure conditions at which diamond is crystallographically stable. Cobalt from the carbide substrate infiltrates the diamond mass during the compact manufacture. In so doing, the carbide substrate Is depleted of cobalt giving rise to stresses in the substrate. These stresses can lead to failure of the composite compact during use.

United States patent specification No. 3,745,623 describes a method of making a composite diamond abrasive compact. In one embodiment of the method, there is not a sharp transition from a carbide-cobalt powder mix (for the carbide substrate) to the diamond powder mix. Instead, a transition layer between the carbide-cobalt mass and the diamond layer may be provided, that transition layer containing both carbide-cobalt powder and diamond grit in a gradated mix to minimise stress concentrations.

United States patent No. 4,802,895 describes a method of making a composite diamond abrasive compact in which a thin layer of fine carbide powder is placed on a surface of a carbide body and a mass of fine diamond particles mixed with powdered cobalt placed on the layer of carbide powder. That unbonded assembly is then subjected to the usual conditions of elevated temperature and pressure to produce the composite diamond abrasive compact.

United States patent No. 4,311,490 describes a method of making a composite diamond abrasive compact in which the diamond mass consists of two layers, a coarse layer being closest to the catalyst metal, i.e. the cobalt, and a fine layer being disposed furthest away from the catalyst metal. The source of cobalt is the carbide substrate.

United States patent No. 4,403,015 describes a method of making a composite abrasive compact in which there Is a intermediate bending layer between the compact and the carbide substrate. This intermediate bonding layer comprises cubic boron nitride in an amount of less than 70 volume percent and the residual part principally consisting of a compound selected from among carbides, nitrides, carbonitrides or borides of IVa, Va, VIa transition metals of the Periodic Table, an admixture thereof, or a mutual solid solution compound thereof.

EP-A-0 246 118 describes a method of manufacturing an abrasive product including the steps of placing, in the following or reverse order, a silicon or titanium-nickel disk or powder on the bottom of a cell, placing a layer of a mixture of diamond particles and iron-nickel powder (or nickel powder when titanium-nickel is employed) on said disk or powder, placing a diffusion barrier containing tungsten carbide particles and diamond particles on the diamond/nickel layer, placing a nickel-plated tungsten or molybdenum disk on said diffusion barrier, providing a tungsten carbide support on the nickel-plated disk, and pressing the assembly at a temperature exceeding 1200°C under a pressure exceeding 45 kbars within the zone of stability of diamond.

EP-A-0 418 078, published after the priority date hereof, describes a method of producing a composite abrasive compact including the steps of providing a cemented carbide substrate having at least two co-operating sections separated by a metallic layer, placing a layer of the components, in particulate form, necessary to produce an abrasive compact on a surface of the substrate to produce an unbonded assembly, and subjecting the unbonded assembly to suitable conditions of elevated temperature and pressure to produce an abrasive compact from the components.

### SUMMARY OF THE INVENTION

The method of the present invention is as set forth in Claim 1.

### DESCRIPTION OF THE DRAWING

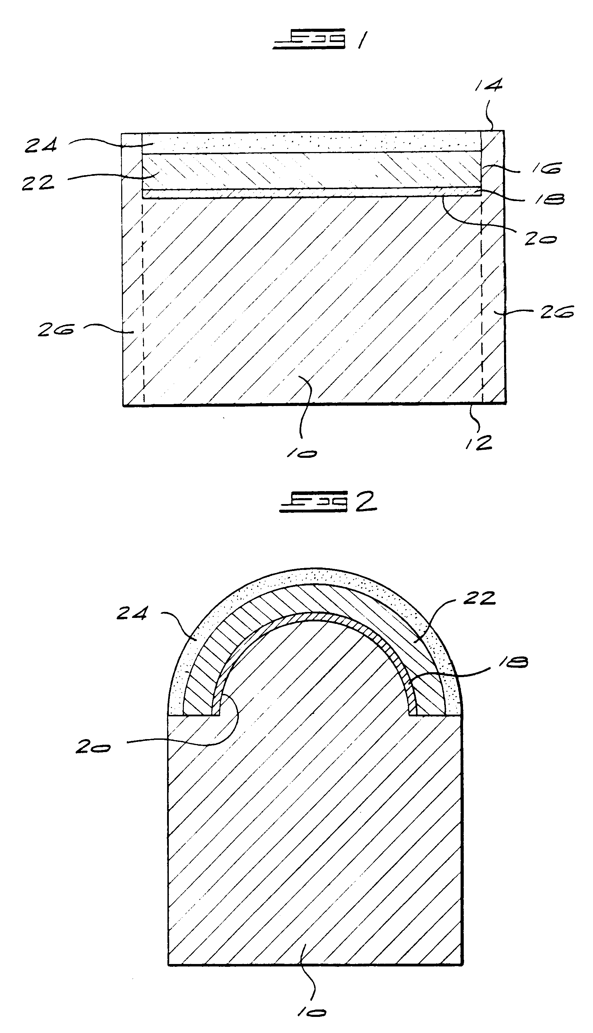

Figures 1 and 2 illustrate sectional side views of two unbonded assemblies useful in the practice of the invention.

### DESCRIPTION OF EMBODIMENTS

The layer of catalyst metal may be provided in the form of a film, shim, disc or powder. It is preferably provided in shim or disc form. The catalyst metal may be any known in the art, preferably nickel, cobalt or iron or an alloy containing one or more of these metals.

The particles of the carbide particle layer may consist of carbide particles alone or carbide particles in admixture with diamond, cubic boron nitride or like particles. The layer may be in particulate form or in bonded form with a non-metallic binder which can be volatilised.

The diamond layer may be in particulate or bonded form with a non-metallic binder which can be volatilised. The layer may contain other particles which do not adversely affect the formation of a diamond compact.

When the carbide particles and/or diamond particles are provided in bonded form, it is preferable that they are bonded by mixing the particles with a suitable organic binder, such as a cellulose, and sintering the mixture.

An embodiment of the invention will now be described with reference to the accompanying drawing. Referring to this drawing, there is shown a cemented carbide body 10 having a lower surface 12 and an upper surface 14. A recess 16 is formed in the upper surface 14.

Located in the recess 16 are three discrete layers. The first layer 18 is in contact with the surface 20 of the body 10 and is a cobalt shim. The second layer 22 is a layer of bonded carbide particles. The third layer 24 is a layer of bonded diamond particles.

The layers 22 and 24 are both formed by first mixing the particular particle with methyl cellulose and then heating that mixture to a temperature of the order of 100°C to form a sintered mass. It is this sintered mass which is then placed in the recess 16.

The unbonded assembly is heated to a temperature of about 300°C. This has the effect of driving off or volatilising the methylcellulose binder from layers 22, 24. The assembly is then placed in a reaction capsule. The loaded capsule is placed in the reaction zone of a high temperature/high pressure apparatus. The contents of the capsule are subjected to a temperature of 1500°C and a pressure of 50 kilobars and these elevated conditions are maintained for a period of about 15 minutes. During this time, cobalt from the layer 18 infiltrates both the layers 22 and 24 producing in these layers cemented carbide and a diamond compact, respectively. Some infiltration of cobalt into the body 10 occurs. A strong bond is produced between the layers 22 and 24 and between the layer 22 and the body 10.

The bonded product may now be recovered from the reaction capsule using conventional techniques. The sides 26 of the body 10 may be removed, for example by grinding, to the dotted lines to produce a composite diamond abrasive compact.

The use of the discrete layers 18, 22 and 24 in the manufacture of the composite diamond abrasive compact has the significant advantage that the properties of the carbide body 10 and the sintered carbide layer 22 are closely matched in terms of thermal expansion coefficients. In addition, the action of the carbide layer 22 and the diamond compact sintering simultaneously, i.e. minimising bimetallic effects, results in a final product which displays significantly lower residual stress levels that a composite diamond abrasive compact made by conventional methods.

Figure 2 illustrates a second embodiment of the invention in which a ballet-shaped composite diamond abrasive compact is produced. The method used is similar to that for the Figure 1 embodiment and like parts carry like numerals. The unbonded assembly will be placed in a complementary shaped capsule for insertion into the reaction zone of a high pressure/high temperature apparatus.

## Claims

1. A method of producing a composite diamond abrasive compact including the steps of forming an unbonded assembly comprising a cemented carbide body (10), a layer (18) of catalyst metal on and in contact with a surface (20) of the carbide body (10), a layer (22) of carbide particles, alone or in admixture with other particles, on and in contact with the catalyst metal layer (18) and a layer (24) of diamond particles on the carbide particle layer (22) and subjecting the unbonded assembly to suitable conditions of elevated temperature and pressure, thereby causing catalyst metal from layer (18) to infiltrate both the layers (22) and (24) producing cemented carbide in layer (22) and a diamond compact in layer (24).

2. A method according to claim 1 wherein the layer (18) of catalyst metal is provided in the form of a film, shim, disc or powder.

3. A method according to claim 1 or claim 2 wherein the catalyst metal is nickel, cobalt or iron or an alloy containing one or more of these metals.

4. A method according to any one of the preceding claims wherein the carbide particle layer (22) is in particulate form.

5. A method according to any one of claims 1 to 3 wherein the carbide particle layer (22) is in bonded form with a non-metallic binder which can be volatilised.

6. A method according to claim 5 wherein the non-metallic binder is a cellulose.

7. A method according to any one of the preceding claims wherein the diamond layer (24) is in particulate form.

8. A method according to any one of claims 1 to 6 wherein the diamond layer (24) is in bonded form with a non-metallic binder which can be volatilised.

9. A method according to claim 8 wherein the non-metallic binder is a cellulose.

## Patentansprüche

1. Verfahren zur Herstellung eines Verbund-Diamantschleifmittel-Kompakts, einschließend die Stufen der Bildung einer nichtgebundenen Zusammensetzung umfassend einen Sintercarbid-Körper (10), eine Schicht (18) aus Katalysatormetall auf und im Kontakt mit einer Oberfläche (20) des Carbidkörpers (10), eine Schicht (22) von Carbid-Teilchen, allein oder in Zumischung mit anderen Teilchen, auf und im Kontakt mit der Katalysatormetallschicht (18) und eine Schicht (24) von Diamant-Teilchen auf der Carbidteilchenschicht (22), und des Unterwerfens der nichtgebundenen Zusammensetzung an geeignete, erhöhte Temperatur- und Druckbedingungen, wodurch verursacht wird, daß Katalysatormetall aus Schicht (18) sowohl in die Schicht (22) als auch (24) eindringt, wobei Sintercarbid in Schicht (22) und ein Diamant-Kompakt in Schicht (24) gebildet wird.

2. Verfahren gemäß Anspruch 1, worin die Schicht (18) aus Katalysatormetall in der Form eines Films, Abstandhalters, einer Scheibe oder eines Pulvers bereitgestellt wird.

3. Verfahren gemäß Anspruch 1 oder 2, worin das Katalysatormetall Nickel, Cobalt oder Eisen oder eine Legierung ist, die ein oder mehrere dieser Metalle enthält.

4. Verfahren gemäß irgendeinem der vorhergehenden Ansprüche, worin die Carbidteilchenschicht (22) in aus einzelnen Teilchen bestehender Form vorliegt.

5. Verfahren gemäß irgendeinem der Ansprüche 1 bis 3, worin die Carbidteilchenschicht (22) in gebundener Form mit einem nichtmetallischen Bindemittel, das verflüchtigt werden kann, vorliegt.

6. Verfahren gemäß Anspruch 5, worin das nichtmetallische Bindemittel eine Cellulose ist.

7. Verfahren gemäß irgendeinem der vorhergehenden Ansprüche, worin die Diamantschicht (24) in aus einzelnen Teilchen bestehender Form vorliegt.

8. Verfahren gemäß irgendeinem der Ansprüche 1 bis 6, worin die Diamantschicht (24) in gebundener Form mit einem nichtmetallischen Bindemittel, das verflüchtigt werden kann, vorliegt.

9. Verfahren gemäß Anspruch 8, worin das nichtmetallische Bindemittel eine Cellulose ist.

## Revendications

1. Procédé pour la production d'un corps compact composite abrasif au diamant comprenant les étapes consistant à former un ensemble non lié comprenant un corps au carbure cémenté (10), une couche (18) de métal catalyseur sur et en contact avec une surface (20) du corps de carbure (10), une couche (22) de particules de carbure, seule ou en mélange additionné aux autres particules, sur et en contact avec la couche de métal catalyseur (18) et une couche (24) de particules de diamant sur la couche de particules de carbure (22) et à soumettre l'ensemble non lié à des conditions appropriées de température et de pression élevées provoquant ainsi l'infiltration du métal catalyseur provenant de la couche (18) à la fois dans les couches (22) et (24) produisant du carbure cémenté dans la couche (22) et un corps compact au diamant dans la couche (24).

2. Procédé selon la revendication 1, dans lequel la couche (18) de métal catalyseur est prévu sous forme d'une pellicule, d'une cale, d'un disque ou de poudre.

3. Procédé selon la revendication 1 ou la revendication 2, dans lequel le métal catalyseur est du nickel, du cobalt ou du fer ou un alliage contenant un ou plusieurs de ces métaux.

4. Procédé selon l'une quelconque des revendications précédentes, dans lequel la couche de particules de carbure (22) est sous forme particulaire.

5. Procédé selon l'une quelconque des revendications 1 à 3, dans lequel la couche de particules de carbure (22) est sous forme liée avec un liant non métallique qui peut être volatilisé.

6. Procédé selon la revendication 5, dans lequel le liant non métallique est de la cellulose.

7. Procédé selon l'une quelconque des revendications précédentes, dans lequel la couche de diamant (24) est sous forme particulaire.

8. Procédé selon l'une quelconque des revendications 1 à 6, dans lequel la couche de diamant (24) est sous forme liée avec un liant non métallique qui peut être volatilisé.

9. Procédé selon la revendication 8, dans lequel le liant non métallique est de la cellulose.
